# EUROPEAN PATENT APPLICATION

(11) **EP 2 746 325 A1**
(43) Date of publication of application: **25.06.2014**
(21) Application number: 12197986.8
(22) Date of filing: 19.12.2012
(51) Int. Cl.: C08K 5/00, C08L 23/10

(54) **Automotive compounds with improved odor**

(71) Applicant: Borealis AG, 1220 Vienna (AT)
(72) Inventor: Kastner, Erwin, 4040 Linz (AT); Lederer, Klaus, 4020 Linz (AT)
(74) Representative: Lux, Berthold

(57) **Abstract**

The present invention relates to a polymer composition comprising a heterophasic propylene copolymer, a mineral filler and a light stabilizer comprising a fatty acid derivative and a benzoate derivative. The polymer composition according to the present invention is applicable for automotive articles whereupon the undesired effect of the final odor is reduced significantly compared to automotive articles comprising conventional light stabilizers.

## Description

The present invention is related to a polymer composition comprising a heterophasic propylene copolymer (HECO) and a specific combination of UV-absorbers. Furthermore the present invention relates to the use of a composition as well as a combination of UV-absorbers in a polymer composition to improve the final odor of the same.

Automotive interior parts like dashboards, door claddings, trims etc. are commonly made from polymers. For such parts it is often tried to mimic a leather- or fabric-like surface and touch in order to give occupants a high-quality impression of the car. Regarding the said products, the odor of the final automotive parts plays a major role for the user. As a result, odor characteristics are important properties regarding automotive interior parts.

The odor of a polymer composition is influenced not only by the basepolymers and fillers, but also by additives and stabilizers. Regarding the light stabilizers, it was found that the application of the frequently used combinations of hindered amine light stabilizers (HALS) "Tinuvin770/Chimasorb119" or "Chimasorb119/Chimasorb944" which are known to the skilled person affects the odor of the final product negatively.

Therefore, the objection of the present invention is the finding of polymer composition comprising a new light stabilizer system which leads to an improved odor of the final product.

Accordingly, the present invention is related to a polymer composition (C), comprising
(a) a heterophasic propylene copolymer (HECO),
(b) a mineral filler (F),
(c) a 1,2,2,6,6-pentamethyl-4-piperidylester derivative of formula (I), 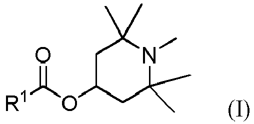 wherein
   the molecular weight is below 1000 g/mol and R¹ is a linear or branched C₅ to C₂₅ alkyl residue, and
(d) a benzoate derivative of formula (II), 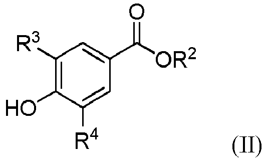
wherein
R² is a linear or branched C₅ to C₂₅ alkyl residue and
R³ and R⁴ are independently from each other methyl, ethyl, linear and/or branched C₃ to C₁₂ alkyl residues.

The present invention also relates to an automotive article comprising the above polymer composition (C).

The present invention also relates to the use of a combination of
(a) 1,2,2,6,6-pentamethyl-4-piperidylester derivative of formula (I) 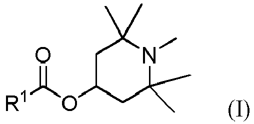 wherein
   the molecular weight is below 1000 g/mol and R¹ is a linear or branched C₅ to C₂₅ alkyl residue,
   and
(b) a benzoate derivative of formula (II) 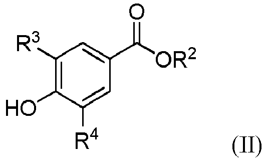
wherein
R² is a linear or branched C₅ to C₂₅ alkyl residue and
R³ and R⁴ are independently from each other methyl, ethyl, linear and/or branched C₃ to C₁₂ alkyl residues
in a polymer composition (C) comprising further a heterophasic propylene copolymer (HECO) and a mineral filler (F) to improve the odor of the polymer composition (C) and/or of the automotive article comprising said polymer composition (C).

The present invention further relates to a process for the preparation of the above polymer composition (C) by extruding the heterophasic propylene copolymer (HECO), the mineral filler (F), the 1,2,2,6,6-pentamethyl-4-piperidylester derivative of formula (I) and the benzoate derivative of formula (II) in an extruder.

A further aspect of the present invention is the use of the above polymer composition (C) in an automotive application.

Further preferred embodiments of the present invention are described in the appended claims.

The polymer composition (C) of the present invention comprises in a preferred embodiment
(a) the heterophasic propylene copolymer (HECO) in an amount of 30 to 80 wt.-%, more preferably 40 to 75 wt.-%, still more preferably 45 to 70 wt.-%,
(b) the mineral filler (F) in an amount no higher than 40 wt.-%, more preferably no higher than 30 wt.-%, still more preferably no higher than 20 wt.-%,
(c) the 1,2,2,6,6-pentamethyl-4-piperidylester derivative of formula (I) and the benzoate derivative of formula (II) combined in an amount of 0.01 to 5.0 wt.-%, more preferably 0.03 to 3.0 wt.-%, still more preferably 0.04 to 0.5 wt.-%, yet more preferably 0.05 to 0.5 wt.-%, like 0.08 to 0.5 wt.-%. based on the total composition.

In a further preferred embodiment, the polymer composition (C) further comprises a polypropylene (PP).

In a further preferred embodiment, the polymer composition (C) further comprises a high melt flow polypropylene (HMF-PP) being a heterophasic propylene copolymer.

In another preferred embodiment, the polymer composition (C) further comprises a high density polyethylene (HDPE).

It is apparent from the wording used for the different polymers (HECO, PP, HMF-PP and HDPE) according to the present invention that they must (chemically) differ from each other.

Accordingly in one embodiment the polymer composition (C) of the present invention comprises in a preferred embodiment
(a) the heterophasic propylene copolymer (HECO) in an amount of 30 to 80 wt.-%, more preferably 40 to 75 wt.-%, still more preferably 45 to 70 wt.-%,
(b) the mineral filler (F) in an amount of 5 to 30 wt.-%, more preferably 10 to 20 wt.-%,
(c) optionally the high melt flow polypropylene (HMF-PP) in an amount of 5 to 30 wt.-%, more preferably 10 to 20 wt.-%,
(d) optionally the high density polyethylene (HDPE) in an amount 5 to 20 wt.-%, more preferably 8 to 15 wt.-%, and
(e) the 1,2,2,6,6-pentamethyl-4-piperidylester derivative of formula (I) and the benzoate derivative of formula (II) combined in an amount of 0.01 to 5.0 wt.-%, more preferably 0.03 to 3.0 wt.-%, still more preferably 0.04 to 0.5 wt.-%, yet more preferably 0.05 to 0.5 wt.-%, like 0.08 to 0.5 wt.-%,
based on the total composition.

The expression "heterophasic" indicates that an elastomeric copolymer is (finely) dispersed in a matrix. In other words the elastomeric copolymer forms inclusions in the matrix. Thus the matrix contains (finely) dispersed inclusions being not part of the matrix and said inclusions contain the elastomeric copolymer. The term "inclusion" according to this invention shall preferably indicate that the matrix and the inclusion form different phases within the heterophasic propylene copolymer, said inclusions are for instance visible by high resolution microscopy, like electron microscopy or scanning force microscopy. In case the composition comprises the polypropylene (PP), the high melt flow polypropylene (HMF-PP) and/or the high density polyethylene (HDPE), the final composition is probably of a complex structure. Probably the matrix of the heterophasic propylene copolymer (HECO) and the matrix of the high melt flow polypropylene (HMF-PP) being a heterophasic propylene copolymer form a continuous phase with the polypropylene (PP), and optionally the high density polyethylene (HDPE) forms individually inclusions dispersed therein.

Additionally the inclusions of the final composition may also contain the mineral filler (F); however preferably the mineral filler (F) forms separate inclusions within the matrix.

The improvement of odor is preferably accomplished in case the odor measured according to VDA 270 is below a value of 3.9, more preferably below a value of 3.5, still more preferably below a value of 3.2.

The polymer composition according to the present invention may be prepared by compounding the components within suitable melt mixing devices for preparing polymeric compounds, including in particular extruders, like single screw extruders as well as twin screw extruders. Other suitable melt mixing devices include planet extruders and single screw co-kneaders. Especially preferred are twin screw extruders including high intensity mixing and kneading sections. Suitable melt temperatures for preparing the compositions are in the range from 170 to 300 °C, preferably in the range from 200 to 260 °C.

In the following the individual components are defined in more detail.

### Heterophasic propylene copolymer (HECO)

One essential component of the present invention is the presence of a heterophasic propylene copolymer (HECO). As already defined above, a heterophasic system comprises a polypropylene matrix (M1) and an amorphous elastomer, i.e. the elastomeric propylene copolymer (E1) dispersed therein. Such polymer compositions are well known in the art and commercially available. This applies especially for the heterophasic propylene copolymer (HECO) as defined in the instant invention.

The polypropylene matrix (M1) of the heterophasic propylene copolymer (HECO) can be a propylene homopolymer or a propylene copolymer with comonomers selected from ethylene and/or C₄ to C₁₂ α-olefins. Preferably, the polypropylene matrix (M1) of the heterophasic propylene copolymer (HECO) is a propylene homopolymer.

The xylene cold insoluble (XCI) fraction of the heterophasic propylene copolymer (HECO) is dominated by the polypropylene matrix (M1), whereas the main component of the xylene cold soluble (XCS) fraction is the elastomeric propylene copolymer (E1). Accordingly on the one hand the properties of the xylene cold insoluble (XCI) fraction and the polypropylene matrix (M1) and on the other hand the properties of the xylene cold soluble (XCS) fraction and the elastomeric propylene copolymer (E1) are essentially the same.

The expression propylene homopolymer used in the instant invention relates to a polypropylene that consists substantially, i.e. of more than 99.7 wt.-%, still more preferably of at least 99.8 wt.-%, of propylene units. In a preferred embodiment only propylene units in the propylene homopolymer are detectable.

Accordingly the comonomer content of the polypropylene matrix (M1) and/or the xylene cold insoluble (XCI) fraction is preferably equal or below 1.0 wt.-%, more preferably not more than 0.8 wt.-%, still more preferably not more than 0.5 wt.-%, like not more than 0.2 wt.-%, e.g. not detectable.

The polypropylene matrix (M1) of the heterophasic propylene copolymer (HECO) can be multimodal or bimodal in view of the molecular weight.

Preferably the polypropylene matrix (M1) and/or the xylene cold insoluble (XCI) fraction of the heterophasic propylene copolymer (HECO) has a melt flow rate MFR₂ (230 °C) in the range of 30 to 90 g/10 min, more preferably in the range of 40 to 70 g/10 min, still more preferably in the range of 45 to 60 g/10 min.

As mentioned above, in addition to the polypropylene matrix (M1), the heterophasic propylene copolymer (HECO) comprises an elastomeric propylene copolymer (E1) which is dispersed within said polypropylene matrix (M1).

According to one embodiment, the elastomeric propylene copolymer (E1) comprises monomers copolymerizable with propylene, for example, comonomers such as ethylene and/or C₄ to C₁₂ α-olefins, e.g. 1-butene and/or 1-hexene. Preferably the elastomeric propylene copolymer (E1) comprises, especially consists of, monomers copolymerizable with propylene selected from the group consisting of ethylene, 1-butene and 1- -hexene. More specifically the elastomeric propylene copolymer (E1) comprises - apart from propylene - units derivable from ethylene and/or 1-butene. Thus in an especially preferred embodiment the elastomeric propylene copolymer (E1) phase comprises units derivable from ethylene and propylene only.

In case the polypropylene matrix (M) of the heterophasic propylene copolymer (HECO) is a propylene copolymer, it is preferred that the comonomer(s) of the propylene copolymer and the elastomeric propylene copolymer (E1) are the same.

In a preferred embodiment, the elastomeric propylene copolymer (E1) and/or the xylene cold soluble (XCS) fraction of the heterophasic propylene copolymer (HECO) has a comonomer content in the range of 10 to 50 wt.-%, more preferably 20 to 45 wt.-%, still more preferably 30 to 42 wt.-%.

Additionally or alternatively to the comonomer content it is preferred that the elastomeric propylene copolymer (E1) and/or the xylene cold soluble (XCS) fraction of the heterophasic propylene copolymer (HECO) has an intrinsic viscosity (IV) in the range of 1.0 to 8.0 dl/g, more preferably in the range of 1.5 to 6.0 dl/g, still more preferably in the range of 2.0 to 3.5 dl/g.

According to one embodiment of the present invention, the amount of the elastomeric propylene copolymer (E1) and/or of the xylene cold soluble (XCS) fraction, of the heterophasic propylene copolymer (HECO) is in the range of 10 to 50 wt.-%, more preferably 15 to 40 wt.-%, still more preferably 20 to 35 wt.-%, based on the total amount of the heterophasic propylene copolymer (HECO).

The comonomer content of the heterophasic propylene copolymer (HECO) is preferably in the range of 3.0 to 25 wt.-%, more preferably in the range of 5.0 to 20 wt.-%, still more preferably in the range of 10 to 18 wt.-%, based on the total amount of the heterophasic propylene copolymer (HECO).

Preferably the heterophasic propylene copolymer (HECO) has a melt flow rate MFR₂ (230 °C) in the range of 1.0 to 50 g/10 min, more preferably 2.0 to 30 g/10 min, still more preferably 5.0 to 20 g/10 min.

In a preferred embodiment, the heterophasic propylene copolymer (HECO) has a flexural modulus in the range of 600 to 950 MPa, more preferably 650 to 900 MPa, still more preferably 700 to 850 MPa, even more preferably 700 to 800 MPa.

Especially preferred the heterophasic propylene copolymer (HECO) is a commercial product of the EF-series of Borealis AG.

### Polypropylene (PP)

The polymer composition (C) according to the present invention optionally comprises a polypropylene (PP).

The polypropylene (PP) can be a propylene homopolymer or a propylene copolymer with comonomers selected from ethylene and/or C₄ to C₁₂ α-olefins. Preferably, the polypropylene matrix (PP) is a propylene homopolymer according to the definition described above.

The polypropylene (PP) preferably has a melt flow rate MFR₂ (230 °C) in the range of 3 to 50 g/10 min, preferably in the range of 5 to 35 g/10 min, still more preferably in the range of 10 to 25 g/10 min.

Preferably the polypropylene (PP) has a density of at least 890 kg/m³, more preferably at least 900 kg/m³, still more preferably in the range of 900 to 912 kg/m³.

### High melt flow polypropylene (HMF-PP)

The polymer composition (C) according to the present invention may further comprise a high melt flow polypropylene (HMF-PP). Such a high melt flow propylene copolymer (HMF-PP) ensures that the final polypropylene composition is featured by a rather high melt flow.

Preferably the high melt flow rate polypropylene (HMF-PP) is a heterophasic propylene copolymer comprising
(a) a polypropylene matrix (M2) and
(b) an elastomeric copolymer (E2) comprising units derived from propylene and ethylene and/or C₄ to C₁₂ α-olefins, preferably ethylene.

Accordingly the high melt flow polypropylene (HMF-PP) being a heterophasic polypropylene copolymer comprises as polymer components only the polypropylene matrix (M2) and the elastomeric propylene copolymer (E2). In other words the high melt flow polypropylene (HMF-PP)) may contain further additives but no other polymer in an amount exceeding 5 wt-%, more preferably exceeding 3 wt.-%, like exceeding 1 wt.-%, based on the total high melt flow polypropylene (HMF-PP), more preferably based on the polymers present in the high melt flow polypropylene (HMF-PP). One additional polymer which may be present in such low amounts is a polyethylene which is a reaction product obtained by the preparation of the high melt flow polypropylene (HMF-PP). Accordingly it is in particular appreciated that a high melt flow polypropylene (HMF-PP) as defined in the instant invention contains only a polypropylene matrix (M2), an elastomeric propylene copolymer (E2) and optionally a polyethylene in amounts as mentioned in this paragraph.

Analogous to the heterophasic propylene copolymer (HECO), the xylene cold insoluble (XCI) fraction of the high melt flow polypropylene (HMF-PP) being a heterophasic propylene copolymer is dominated by the polypropylene matrix (M2), whereas the main component of the xylene cold soluble (XCS) fraction is the elastomeric propylene copolymer (E2). Accordingly on the one hand the properties of the xylene cold insoluble (XCI) fraction and the polypropylene matrix (M2) and on the other hand the properties of the xylene cold soluble (XCS) fraction and the elastomeric propylene copolymer (E2) are essentially the same.

Accordingly the polypropylene matrix (M2) and/or the xylene cold insoluble (XCIfraction of the high melt flow polypropylene (HMF-PP) is preferably in the range of 80.0 to 93.0 wt.-%, more preferably in the range of 82.0 to 91.0 wt.-%, like 83.0 to 89.0 wt.-%.

On the other hand the elastomeric propylene copolymer (E2) and/or the xylene cold soluble (XCS) fraction of the high melt flow polypropylene (HMF-PP) is preferably in the range of 7.0 to 20.0 wt.-%, more preferably in the range of 9.0 to 18.0 wt.-%, like 11.0 to 17.0 wt.-%.

Further, the polypropylene matrix (M2) is preferably propylene copolymer or a propylene homopolymer, the latter especially preferred.

Accordingly the comonomer content of the polypropylene matrix (M2) and/or the xylene cold insoluble (XCI) fraction is equal or below 1.0 wt.-%, yet more preferably not more than 0.8 wt.-%, still more preferably not more than 0.5 wt.-%, like not more than 0.2 wt.-%.

As mentioned above the polypropylene matrix (M2) is preferably a propylene homopolymer.

It is preferred that in the present invention the polypropylene matrix (M2) and/or the xylene cold insoluble (XCI) fraction of the high melt flow polypropylene (HMF-PP) has a MFR₂ (230 °C) in the range of 100 to 1500 g/10 min, more preferably in the range of 120 to 800 g/10 min, still more preferably in the range of 150 to 500 g/10 min.

The second component of the high melt flow polypropylene (HMF-PP) is the elastomeric propylene copolymer (E2).

The elastomeric propylene copolymer (E2) comprises, preferably consists of, units derivable from (i) propylene and (ii) ethylene and/or at least another C₄ to C₁₂ α-olefin, like C₄ to C₁₀ α-olefin, more preferably units derivable from (i) propylene and (ii) ethylene and/or at least an α-olefin selected form the group consisting of 1-butene, 1-pentene, 1-hexene, 1-heptene and 1-octene.

Accordingly the elastomeric propylene copolymer (E2) comprises at least units derivable from propylene and ethylene and may comprise other units derivable from a further α-olefin as defined in the previous paragraph. However, it is in particular preferred that elastomeric propylene copolymer (E2) comprises units only derivable from propylene and ethylene. Thus an ethylene/propylene rubber as elastomeric copolymer (E2) is especially preferred.

Preferably the high melt flow polypropylene (HMF-PP) has a melt flow rate MFR₂ (230 °C) of at least 60 g/10 min, more preferably at least 75 g/10 min, still more preferably of at least 90 g/10 min.

Preferably the high melt flow polypropylene (HMF-PP) has a density, measured according to ISO 1138, of at least 890 kg/m³, more preferably at least 900 kg/m³, still more preferably from 900 to 915 kg/m³.

Preferably the propylene content in the high melt flow polypropylene (HMF-PP) is 85.0 to 96.0 wt.-%, more preferably 88.0 to 94.0 wt.-%, based on the total high melt flow polypropylene (HMF-PP), more preferably based on amount of the polymer components of the high melt flow polypropylene (HMF-PP), yet more preferably based on the amount of the polypropylene matrix (M2) and the elastomeric propylene copolymer (E2) together. The remaining part constitute the comonomers different from propylene (ethylene and/or C₄ to C₁₂ α-olefin), preferably constitutes ethylene.

Especially preferred the high melt flow polypropylene (HMF-PP) is a commercial product of the BJ-series of Borealis AG.

### High density polyethylene (HDPE)

The polymer composition (C) according to the present invention optionally comprises a high density polyethylene (HDPE).

The high density polyethylene (HDPE) preferably has a melt flow rate MFR₂ (190 °C) in the range of 2 to 30 g/10 min, more preferably in the range of 3 to 20 g/10 min, still more preferably in the range of 5 to 15 g/10 min.

Preferably, the high density polyethylene (HDPE) has a density of at least 930 kg/m³, more preferably in the range of 930 to 980 kg/m³, still more preferably in the range of 940 to 970 kg/m³_{.}

Especially preferred the high density polyethylene (HDPE) is the commercial product MG9641 of Borealis AG.

### Mineral filler (F)

In addition to the polymer components the polymer composition (C) according to the present invention comprises a mineral filler, preferably in amounts of up to 40 wt.-%, preferably up to 30 wt.-%, more preferably up to 20 wt.-%, yet more preferably in the range of 5.0 to 40 wt-%, still more preferably in the range of 5.0 to 30 wt.-%, even more preferably in the range of 5.0 to 20 wt.-%, like in the range of 10.0 to 20 wt-%.

Preferably the mineral filler (F) is a phyllosilicate, mica or wollastonite. Even more preferably the mineral filler (F) is selected from the group of mica, wollastonite, kaolinite, smectite, montmorillonite and talc. The most preferred mineral filler (F) is talc.

The mineral filler (F) preferably has a specific surface area (BET) in the range of 5 to 25 m²/g, more preferably in the range of 8 to 20 m²/g, still more preferably in the range of 12 to 16 m²/g_{.}

### Light stabilizers

Essential finding o the present invention is that the instant polymer composition (C) must comprise two specifically selected light stablilizers.

Light stabilizers are chemical compounds capable of interfering with the physical and chemical processes of light-induced degradation.

The specific finding of the present invention is that the polymer composition (C) must comprise two different light stabilizers, one belonging to the class of UV-absorbers, like 4-hydroxybenzoates, and one belonging to the class of free radical scavengers, like hindered amine light stabilizers (HALS).

Hindered amine light stabilizers (HALS) are a class of free radical scavengers known to the skilled person. A hindered amine light stabilizer (HALS) contains one or more sterically hindered amine functionalities. Typically, 2,2,6,6-tetramethyl piperidin derivatives are frequently as hindered amine light stabilizers (HALS).

Accordingly the instant polymer composition (C) must comprise
(a) a 1,2,2,6,6-pentamethyl-4-piperidylester derivative of formula (I), 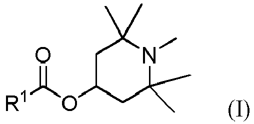 wherein the molecular weight is below 1000 g/mol and R¹ is a linear or branched C₅ to C₂₅ alkyl residue,
   and
(b) a benzoate derivative of formula (II), 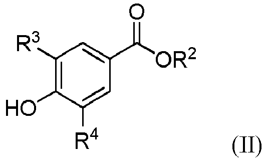
wherein R² is a linear or branched C₅ to C₂₅ alkyl residue and R³ and R⁴ are independently from each other Methyl, Ethyl, linear and/or branched C₃ to C₁₂ alkyl residues.

Preferably the combination of the 1,2,2,6,6-pentamethyl-4-piperidylester derivative of formula (I) and the benzoate derivative of formula (II) is the only combination of light stabilizers within the polymer composition (C).

Thus according to the present invention, one component of the light stabilizer is a 1,2,2,6,6-pentamethyl-4-piperidylester of a fatty acid according to formula (I), whereupon R¹ is a linear or branched C₅ to C₂₅ alkyl residue, more preferably C₁₁ to C₁₈. In a preferred embodiment, R¹ is a linear C₁₆ to C₁₈ alkyl residue.

The other component of the light stabilizer according to the present invention is the benzoate derivative of formula (II), whereupon R² is a linear or branched C₅ to C₂₅ alkyl residue, like a linear C₅ to C₂₅ alkyl residue, preferably C₁₀ to C₂₀ alkyl residue, like a linear C₁₀ to C₂₀ alkyl residue, more preferably C₁₂ to C₁₈ alkyl residue, like a linear C₁₂ to C₁₈ alkyl residue. In a preferred embodiment, R² is a linear C₁₆ alkyl residue. R³ and R⁴ of the benzoate derivative of formula (II) are independently from each other methyl, ethyl, linear and/or branched C₃ to C₁₂ alkyl residues. Preferably, R³ and R⁴ contain no more than 4 carbon atoms, respectively. Thus, in a preferred embodiment R³ and R⁴ are independently selected from the group consisting of methyl, ethyl, *n*-propyl, *iso*-propyl, *n*-butyl, *sec*.-butyl and/or *tert*.-butyl. More preferably, R³ and R⁴ are *tert*.-butyl residues. Thus, in an especially preferred embodiment, the benzoate derivative of formula (II) is *n*-hexadecyl-3,5-di-*tert*.-butyl-4-hydroxybenzoate.

Preferably the weight ratio between the UV-absorber, like the 4-hydroxybenzoate, e.g. the benzoate derivative of formula (II), and the free radical scavenger, like the hindered amine light stabilizer (HALS), e.g. the 1,2,2,6,6-pentamethyl-4-piperidylester derivative of formula (I), is in the range of 70:30 to 30:70, more preferably in the range of 60:40 to 40 to 60, still more preferably in the range of 55:45 to 45:55, like 50 : 50.

As mentioned above, typically the amount of the two light stabilizers together in the polymer composition (C), e.g. the total amount of the 1,2,2,6,6-pentamethyl-4-piperidylester derivative of formula (I) and the benzoate derivative of formula (II) together in the polymer composition (C), is in the range of 0.01 to 5.0 wt-%, more preferably 0.03 to 3.0 wt.-%, still more preferably 0.04 to 0.5 wt.-%, yet more preferably 0.05 to 0.5 wt.-%, like 0.08 to 0.5 wt.-%, based on the total amount of the polymer composition (C).

### Further components

The instant polymer composition (C) may comprise additional typical additives different to those mentioned above, i.e. different to the light stabilizers and the mineral filler (F). Such typical additives are antioxidants and slip agents and pigments. Preferably the amount of additives excluding the mineral filler (F) and the light stabilizers shall not exceed 8 wt.-%, more preferably 5 wt. -%, still more preferably 3 wt.-% within the total composition.

All components used for the preparation of the instant composition are known. Accordingly also their preparation is well known. For instance the heterophasic propylene copolymer (HECO) according to this invention is preferably produced in a multistage process known in the art, wherein the matrix is produced at least in one slurry reactor and subsequently the elastomeric copolymer is produced at least in one gas phase reactor.

Thus, the polymerization system can comprise one or more conventional stirred slurry reactors and/or one or more gas phase reactors. Preferably the reactors used are selected from the group of loop and gas phase reactors and, in particular, the process employs at least one loop reactor and at least one gas phase reactor. It is also possible to use several reactors of each type, e.g. one loop and two or three gas phase reactors, or two loops and one or two gas phase reactors, in series.

Preferably the process comprises also a prepolymerisation with the chosen catalyst system, as for instance in detail below comprising (i) a Ziegler-Natta procatalyst, (ii) a cocatalyst and (iii) an external donor.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation reaction is typically conducted at a temperature of 0 to 50 °C, preferably from 10 to 45 °C, and more preferably from 15 to 40 °C.

The pressure in the prepolymerisation reactor is not critical but must be sufficiently high to maintain the reaction mixture in liquid phase. Thus, the pressure may be from 20 to 100 bar, for example 30 to 70 bar.

The catalyst components are preferably all introduced to the prepolymerisation step. However, where the solid catalyst component (i) and the cocatalyst (ii) can be fed separately it is possible that only a part of the cocatalyst is introduced into the prepolymerisation stage and the remaining part into subsequent polymerization stages. Also in such cases it is necessary to introduce so much cocatalyst into the prepolymerisation stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or to the walls of the reactor.

The precise control of the prepolymerization conditions and reaction parameters is within the skill of the art.

A slurry reactor designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises a bulk loop reactor.

"Gas phase reactor" means any mechanically mixed or fluid bed reactor. Preferably the gas phase reactor comprises a mechanically agitated fluid bed reactor with gas velocities of at least 0.2 m/sec.

The particularly preferred embodiment for the preparation of the heterophasic propylene copolymers as described herein comprises carrying out the polymerization in a process comprising either a combination of one loop and one or two gas phase reactors or a combination of two loops and one or two gas phase reactors.

A preferred multistage process is a slurry-gas phase process, such as developed by Borealis and known as the Borstar^{®} technology. In this respect, reference is made to EP 0 887 379 A1, WO 92/12182, WO 2004/000899, WO 2004/111095, WO 99/24478, WO 99/24479 and WO 00/68315. They are incorporated herein by reference.

A further suitable slurry-gas phase process is the Spheripol^{®} process of Basell.

Preferably the heterophasic propylene copolymer s are produced by using a special Ziegler-Natta procatalyst in combination with a special external donor, as described below in detail, preferably in the Spheripol^{®} or in the Borstar^{®}-PP process.

One preferred multistage process may therefore comprise the steps of:
- producing a polypropylene matrix in the presence of the chosen catalyst system, as for instance described in detail below, comprising the special Ziegler-Natta procatalyst (i), an external donor (iii) and the cocatalyst (ii) in a first slurry reactor and optionally in a second slurry reactor, both slurry reactors using the same polymerization conditions,
   - transferring the slurry reactor product into at least one first gas phase reactor, like one gas phase reactor or a first and a second gas phase reactor connected in series,
   - producing an elastomeric copolymer in the presence of the polypropylene matrix and in the presence of the catalyst system in said at least first gas phase reactor,
   - recovering the polymer product for further processing.

With respect to the above-mentioned preferred slurry-gas phase process, the following general information can be provided with respect to the process conditions.

Temperature is preferably from 40 to 110°C, preferably between 50 and 100 °C, in particular between 60 and 90 °C, with a pressure in the range of from 20 to 80 bar, preferably 30 to 60 bar, with the option of adding hydrogen in order to control the molecular weight in a manner known per se.

The reaction product of the slurry polymerization, which preferably is carried out in a loop reactor, is then transferred to the subsequent gas phase reactor(s), wherein the temperature preferably is within the range of from 50 to 130 °C, more preferably 60 to 100 °C, at a pressure in the range of from 5 to 50 bar, preferably 8 to 35 bar, again with the option of adding hydrogen in order to control the molecular weight in a manner known per se.

The average residence time can vary in the reactor zones identified above. In one embodiment, the average residence time in the slurry reactor, for example a loop reactor, is in the range of from 0.5 to 5 hours, for example 0.5 to 2 hours, while the average residence time in the gas phase reactor generally will be from 1 to 8 hours.

If desired, the polymerization may be effected in a known manner under supercritical conditions in the slurry, preferably loop reactor, and/or as a condensed mode in the gas phase reactor.

According to the invention the heterophasic propylene copolymers are preferably obtained by a multistage polymerization process, as described above, in the presence of a catalyst system comprising as component (i) a Ziegler-Natta procatalyst which contains a transesterification product of a lower alcohol and a phthalic ester.

The procatalyst used according to the invention is prepared by
a) reacting a spray crystallized or emulsion solidified adduct of MgCl₂ and a C₁-C₂ alcohol with TiCl₄
b) reacting the product of stage a) with a dialkylphthalate of formula (III) 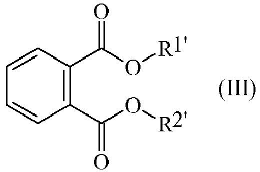 wherein R^{1'} and R^{2'} are independently at least a C₅ alkyl
   under conditions where a transesterification between said C₁ to C₂ alcohol and said dialkylphthalate of formula (III) takes place to form the internal donor
c) washing the product of stage b) or
d) optionally reacting the product of step c) with additional TiCl₄.

The procatalyst is produced as defined for example in the patent applications WO 87/07620, WO 92/19653, WO 92/19658 and EP 0 491 566. The content of these documents is herein included by reference.

First an adduct of MgCl₂ and a C₁-C₂ alcohol of the formula MgCl₂*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula MgCl₂*nROH, wherein R is methyl or ethyl, preferably ethyl and n is 1 to 6, is contacting with TiCl₄ to form a titanised carrier, followed by the steps of
● adding to said titanised carrier
   (i) a dialkylphthalate of formula (III) with R^{1'} and R^{2'} being independently at least a C₅-alkyl, like at least a C₈-alkyl,
      or preferably
   (ii) a dialkylphthalate of formula (III) with R^{1'} and R^{2'} being the same and being at least a C₅-alkyl, like at least a C₈-alkyl,
      or more preferably
   (iii) a dialkylphthalate of formula (III) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,
   to form a first product,
● subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (III) to form preferably at least 80 mol-%, more preferably 90 mol-%, most preferably 95 mol.-%, of a dialkylphthalate of formula (IV) 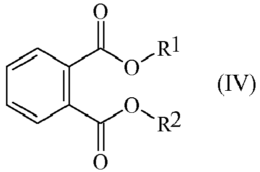 with R¹ and R² being methyl or ethyl, preferably ethyl,
   the dialkylphthalat of formula (IV) being the internal donor and
● recovering said transesterification product as the procatalyst composition (component (i)).

The adduct of the formula MgCl₂*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.

This crystallized adduct is preferably used as the catalyst carrier and reacted to the procatalyst useful in the present invention as described in WO 92/19658 and WO 92/19653.

As the catalyst residue is removed by extracting, an adduct of the titanised carrier and the internal donor is obtained, in which the group deriving from the ester alcohol has changed.

In case sufficient titanium remains on the carrier, it will act as an active element of the procatalyst.

Otherwise the titanization is repeated after the above treatment in order to ensure a sufficient titanium concentration and thus activity.

Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.

More preferably the procatalyst used according to the invention has been produced by using ethanol as the alcohol and dioctylphthalate (DOP) as dialkylphthalate of formula (III), yielding diethyl phthalate (DEP) as the internal donor compound.

Still more preferably the catalyst used according to the invention is the catalyst as described in the example section; especially with the use of dioctylphthalate as dialkylphthalate of formula (III).

In a further embodiment, the Ziegler-Natta procatalyst can be modified by polymerising a vinyl compound in the presence of the catalyst system, comprising the special Ziegler-Natta procatalyst, an external donor and a cocatalyst, which vinyl compound has the formula:

CH₂=CH-CHR³R⁴

wherein R³ and R⁴ together form a 5- or 6-membered saturated, unsaturated or aromatic ring or independently represent an alkyl group comprising 1 to 4 carbon atoms, and the modified catalyst is used for the preparation of the heterophasic propylene copolymer (HECO). The polymerized vinyl compound can act as an α-nucleating agent. This modification is in particular used for the preparation of the heterophasic propylene copolymer (HECO).

Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.

For the production of the heterophasic propylene copolymers, the catalyst system used preferably comprises in addition to the special Ziegler-Natta procatalyst an organometallic cocatalyst as component (ii).

Accordingly it is preferred to select the cocatalyst from the group consisting of trialkylaluminium, like triethylaluminium (TEA), dialkyl aluminium chloride and alkyl aluminium sesquichloride.

Component (iii) of the catalysts system used is an external donor represented by formula (Va) or (Vb). Formula (Va) is defined by

Si(OCH₃)₂R₂⁵ (Va)

wherein R⁵ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.

It is in particular preferred that R⁵ is selected from the group consisting of iso-propyl, iso-butyl, iso-pentyl, tert.-butyl, tert.-amyl, neopentyl, cyclopentyl, cyclohexyl, methylcyclopentyl and cycloheptyl.

Formula (Vb) is defined by

Si(OCH₂CH₃)₃(NR^{x}R^{y}) (Vb)

wherein R^{x} and R^{y} can be the same or different a represent a hydrocarbon group having 1 to 12 carbon atoms.

R^{x} and R^{y} are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R^{x} and R^{y} are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both R^{x} and R^{y} are the same, yet more preferably both R^{x} and R^{y} are an ethyl group.

More preferably the external donor of formula (Vb) is diethylaminotriethoxysilane .

Most preferably the external donor is of formula (Va), like dicyclopentyl dimethoxy silane [Si(OCH₃)₂(cyclo-pentyl)₂] or diisopropyl dimethoxy silane [Si(OCH₃)₂CH(CH₃)₂)₂].

For mixing the individual components of the instant composition, a conventional compounding or blending apparatus, e.g. a Banbury mixer, a 2-roll rubber mill, Buss-co-kneader or a twin screw extruder may be used. The polymer materials recovered from the extruder are usually in the form of pellets. These pellets are then preferably further processed, e.g. by injection moulding to generate articles and products of the inventive composition.

Accordingly the present invention is also directed to a process for the preparation of the instant composition (C) comprising the steps of adding the polymer components, i.e. the heterophasic propylene copolymer (HECO) and optionally the high density polyethylene (HDPE), the polypropylene (PP) and/or the high melt flow polypropylene (HMF-PP), the mineral filler (F) and the composition of the 1,2,2,6,6-pentamethyl-4-piperidylester derivative of formula (I) and the benzoate derivative of formula (II) to an extruder (as mentioned above) and extruding the same obtaining thereby said polypropylene composition (C).

The polypropylene composition according to the invention may be pelletized and compounded using any of the variety of compounding and blending methods well known and commonly used in the resin compounding art.

### Articles made from the polymer composition (C)

The current invention also provides (automotive) articles, like injection molded articles, comprising at least to 60 wt.-%, more preferably at least 80 wt.-%, yet more preferably at least 95 wt.-%, like consisting, of the inventive polymer composition (C). Accordingly the present invention is especially directed to automotive articles, especially to car interiors and exteriors, like bumpers, side trims, step assists, body panels, spoilers, dashboards, interior trims and the like, comprising at least to 60 wt.-%, more preferably at least 80 wt.-%, yet more preferably at least 95 wt.-%, like consisting, of the inventive polymer composition (C).

### Uses according to the invention

The polymer composition (C) of the present invention is preferably used for automotive articles, like moulded automotive articles, preferably automotive injection moulded articles. Even more preferred is the use of the polymer composition (C) for car interiors and exteriors, like bumpers, side trims, step assists, body panels, spoilers, dashboards, interior trims and the like.

The present invention is especially directed to the use of a 1,2,2,6,6-pentamethyl-4-piperidylester derivative of formula (I) and a benzoate derivative of formula (II) in a polymer composition (C) comprising a heterophasic propylene copolymer (HECO) and a mineral filler (F) to reduce the effect malodor.

The present invention is especially directed to the use of a combination of
(a) a 1,2,2,6,6-pentamethyl-4-piperidylester derivative of formula (I) 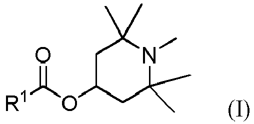 wherein
   the molecular weight is below 1000 g/mol and R¹ is a linear or branched C₅ to C₂₅ alkyl residue,
   and
(b) a benzoate derivative of formula (II) 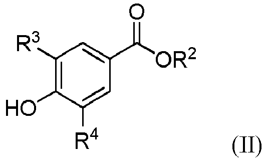 wherein
   R² is a linear or branched C₅ to C₂₅ alkyl residue and
   R³ and R⁴ are independently from each other methyl, ethyl, linear and/or branched C₃
   to C₁₂ alkyl residues,
in a polymer composition (C) comprising further a heterophasic propylene copolymer (HECO) and a mineral filler (F)
to improve the odor of the polymer composition (C) and/or of the automotive article comprising said polymer composition (C).

The improvement of odor is preferably accomplished in case the odor measured according to VDA 270 is below a value of 3.9, more preferably below a value of 3.5, still more preferably below a value of 3.2.

Thus for instance the use of a 1,2,2,6,6-pentamethyl-4-piperidylester derivative of formula (I) and a benzoate derivative of formula (II) in a polymer composition (C) comprising
(a) the heterophasic propylene copolymer (HECO) in an amount of 30 to 80 wt.-%, more preferably 40 to 75 wt.-%, still more preferably 45 to 70 wt.-%,
(b) the mineral filler (F) in an amount no higher than 40 wt.-%, more preferably no higher than 30 wt.-%, still more preferably no higher than 20 wt.-%,
(c) the 1,2,2,6,6-pentamethyl-4-piperidylester derivative of formula (I) and the benzoate derivative of formula (II) combined in an amount of 0.01 to 5.0 wt.-%, more preferably 0.03 to 3.0 wt.-%, still more preferably 0.04 to 0.5 wt.-%, yet more preferably 0.05 to 0.5 wt.-%, like 0.08 to 0.5 wt.-%,
based on the total composition. improves the odor of the polymer composition (C) and/or the automotive article comprising said polymer composition (C).

In the following the present invention is further illustrated by means of examples.

### EXAMPLES

The following definitions of terms and determination methods apply for the above general description of the invention as well as to the below examples unless otherwise defined.

### 1. Definitions/Measuring Methods

The following definitions of terms and determination methods apply for the above general description of the invention as well as to the below examples unless otherwise defined.
**Density** is measured according to ISO 1183-1 - method A (2004). Sample preparation is done by compression moulding in accordance with ISO 1872-2:2007.
**MFR₂ (230 °C)** is measured according to ISO 1133 (230 °C, 2.16 kg load).
**MFR₂ (190 °C)** is measured according to ISO 1133 (190 °C, 2.16 kg load).
**The xylene solubles (XCS, wt.-%):** Content of xylene cold solubles (XCS) is determined at 25 °C according ISO 16152; first edition; 2005-07-01. The part which remains insoluble is the xylene cold insoluble (XCI) fraction.
**Intrinsic viscosity** is measured according to DIN ISO 1628/1, October 1999 (in Decalin at 135 °C).

### Quantification of comonomer content by FTIR spectroscopy

The comonomer content is determined by quantitative Fourier transform infrared spectroscopy (FTIR) after basic assignment calibrated via quantitative ¹³C nuclear magnetic resonance (NMR) spectroscopy in a manner well known in the art. Thin films are pressed to a thickness of between 100-500 µm and spectra recorded in transmission mode. Specifically, the ethylene content of a polypropylene-co-ethylene copolymer is determined using the baseline corrected peak area of the quantitative bands found at 720-722 and 730-733 cm⁻¹. Specifically, the butene or hexene content of a polyethylene copolymer is determined using the baseline corrected peak area of the quantitative bands found at 1377-1379 cm⁻¹. Quantitative results are obtained based upon reference to the film thickness.
Flexural Modulus: The flexural modulus was determined in 3-point-bending at 23°C according to ISO 178 on 80x10x4 mm³ test bars injection moulded in line with EN ISO 1873-2
Specific surface area is determined as the BET surface according to DIN 66131/2 (N₂). VDA **270-Method** to detect the sensory impression of **smell/odor**(available for instance from "Dokumentation Kraftfahrwesen (DKF); Ulrichstraße 14, 74321 Bietigheim Bissingen)

### Testing sets

a) heat chamber with air circulation according to DIN 50 011-12; accuracy class 2
b) 1 or 3 litre glass testing cup with unscented sealing and lid; the cup, the sealing and the lid have to be cleaned before use.

**Table 1: Specimen**

| **Variant** | **Examples** | **Sample quantity for 1 litre cup** | **Sample quantity for 3 litre cup** |
|---|---|---|---|
| A | Clips, plug, other small parts | 10 +/-1g | 30 +/-3 g |
| B | Arm rest, ash tray, handhold, sunshade and other medium sized parts | 20 +/-2 g | 60+/-6g |
| C | Insulating material, foils, leather, cover fabric, celluar material, like foam, carpets and other large-scale parts | 50 +/-5 g | 150 +/-15 g |

In case of variant C the material thickness is less than 3 mm, in the 1-litre testing cup a specimen of 200+/- 20 cm² is used whereas in the 3-litre testing cup a specimen of 600+/-60 cm² is used. In case the material thickness is more than 20 mm, the specimen used must be trimmed to a size of below 20 mm. Sandwich-assemblies are tested as a whole. In case of small parts, several specimens have to be used to obtain the desired amount to be tested. In the present application variant B has been used.

### Procedure

Three different storage conditions are available (table 2). In the present application variant 3 has been used.

**Table 2: Storage conditions**

| **Variant** | **Temperature** | **Storage period** | **Note** |
|---|---|---|---|
| 1 | 23+/-2 °C | 24+/- h | a, b, c, d, f |
| 2 | 40+/-2 °C | 24+/- h | a, b, c, d, f |
| 3 | 80+/-2 °C | 2 h +/- 10min | a, c, e, f |

a) for variants 1 and 2 50 ml deionized water is added to the 1-litre testing cup and 150 ml deionized water is added to the 3-litre testing cup
b) the specimen(s) is/are placed in a manner avoiding direct contact with water
c) the testing cup is tightly closed stored in the preheated heat chamber
d) for variants 1 and 2 the testing takes place immediately after removal of the testing cup from the heat chamber.
e) for variant 3 the testing cup must be cooled down to a temperature of 60+/-5 °C after removal from the heat chamber before being tested; after testing by three testers the testing cup must be stored for 30 minutes at 80-/-2 °C in the heat chamber before further testing is carried out
f) the rating must be carried out by at least three testers; differ the individual ratings of the testers in the grading by two points, a repetition of the testing by at least five testers must follow

### Analysis

The rating of smell for all variants is accomplished by the scale as given in table 3. Grades are given from 1 to 6, whereby half grades are possible.

**Table 3: Rating of smell**

| **Grade** | **Rating** |
|---|---|
| 1 | not noticeable |
| 2 | noticeable; undisturbing |
| 3 | clearly noticeable; but not yet disturbing |
| 4 | disturbing |
| 5 | severely disturbing |
| 6 | intolerable |

The result is given as an average value, rounded by half grades. The used variant is indicated with the result.

In the present application variant C/3 has been used.

### 2. Examples

**Table 4: Properties of the heterophasic propylene copolymers**

| | | **HECO** | **HMF-PP** |
|---|---|---|---|
| MFR | [g/10min] | 10.5 | 100.0 |
| MFR of XCI | [g/10min] | 50 | 160 |
| XCS | [wt%] | 29.0 | 15 |
| C2 total | [wt%] | 15.5 | 8.0 |
| C2 in XCS | [wt%] | 39.0 | 39 |
| IV of XCS | [dl/g] | 3.0 | 1.9 |
| Flexural Modulus | [MPa] | 770 | - |

**Table 5: Inventive Example 1 and Comparative Example 1**

| **Example*** | | **CE 1** | **IE 1** |
|---|---|---|---|
| HECO | [wt%] | 61.0 | 61.1 |
| Talc | [wt%] | 16.0 | 16.0 |
| UV1a | [wt%] | - | 0.05 |
| UV1b | [wt%] | - | 0.05 |
| UV2 | [wt%] | 0.1 | - |
| UV3 | [wt%] | 0.1 | - |
| HDPE | [wt%] | 10.0 | 10.0 |
| PP | [wt%] | 9.0 | 9.0 |
| Odor VDA 270 | [-] | 4.6 | 3.75 |

| | | | |
|---|---|---|---|
| Rest to 100 wt.-% are additives, like antioxidants and pigments. | | | |

**Table 6: Inventive Example 2 and Comparative Example 2**

| **Example*** | | **CE 2** | **IE 2** |
|---|---|---|---|
| HECO | [wt%] | 49.7 | 49.8 |
| Talc | [wt%] | 16.5 | 16.5 |
| UV1a | [wt%] | - | 0.05 |
| UV1b | [wt%] | - | 0.05 |
| UV4 | [wt%] | 0.11 | - |
| HDPE | [wt%] | 10.0 | 10.0 |
| HMF-PP | [wt%] | 15.0 | 15.0 |
| Odor VDA 270 | [-] | 4.0 | 3.0 |

| | | | |
|---|---|---|---|
| Rest to 100 wt.-% are additives, like antioxidants and pigments. | | | |

- **"Talc"**: is the commercial talc Jetfine 3CA of Imerys Talc Austria GmbH, having a specific surface area (BET) of 14.5 m²/g.
- **"UV1a"**: is the commercial product CYASORB UV-2908 of Cytec.
- **"UV1b"**: is the commercial product CYASORB UV-3853 of Cytec.
- **"UV2"**: is the commercial product TINUVIN770 of BASF.
- **"UV3"**: is the commercial product CHIMASORB 944 of BASF.
- **"UV4"**: is the commercial product CHIMASORB 119FL of BASF.
- **"HDPE"**: is the commercial product MG9641 of Borealis AG having a MFR₂ (190 °C) of 8g/10 min and a density of 964 kg/m³.
- **"PP"**: is the commercial product HF955MO of Borealis AG having a MFR₂ (230 °C) of 20 g/10 min and a density of 908 kg/m³.

## Claims

1. Polymer Composition (C), comprising
(a) a heterophasic propylene copolymer (HECO),
(b) a mineral filler (F),
(c) a 1,2,2,6,6-pentamethyl-4-piperidylester derivative of formula (I), 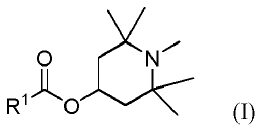 wherein
the molecular weight is below 1000 g/mol and R¹ is a linear or branched C₅ to C₂₅ alkyl residue, and
(d) a benzoate derivative of formula (II), 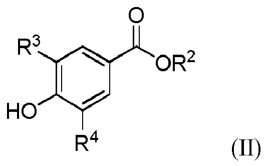 wherein
R² is a linear or branched C₅ to C₂₅ alkyl residue and
R³ and R⁴ are independently from each other Methyl, Ethyl, linear and/or branched C₃ to C₁₂ alkyl residues.

2. Polymer composition (C) according to claim 1 or 2, wherein R¹ of formula (I) is C₁₁ to C₁₈ alkyl and the benzoate derivative of formula (II) is n-hexadecyl-3,5-di-tert.-butyl-4-hydroxybenzoate.

3. Polymer composition (C) according to any one of the preceding claims, wherein said polymer composition (C) comprises
(a) the heterophasic propylene copolymer (HECO) in an amount of 30 to 80 wt.-%,
(b) the mineral filler (F) in an amount no higher than 40 wt.-%, and
(c) the 1,2,2,6,6-pentamethyl-4-piperidylester derivative of formula (I) and the benzoate derivative of formula (II) combined in an amount of 0.01 to 5 wt.-%,
based on the total composition.

4. Polymer composition (C) according to any one of the preceding claims, wherein the heterophasic propylene copolymer (HECO) comprises
(a) a polypropylene matrix (M) being a propylene homopolymer or a propylene copolymer, and
(b) an elastomeric propylene copolymer (E).

5. Polymer composition (C) according to any one of the preceding claims, wherein the heterophasic propylene copolymer (HECO) has
(a) a melt flow rate MFR₂ (230 °C), measured according to ISO 1133, in the range of 1.0 to 50 g/10 min,
(b) a comonomer content in the range of 3.0 to 25 wt.-%, based on the total heterophasic propylene copolymer (HECO), and
(c) a xylene soluble content (XCS) in the range of 10 to 50 wt.-%, based on the total heterophasic propylene copolymer (HECO).

6. Polymer composition (C) according to any one of the preceding claims, wherein the matrix (M) of the heterophasic propylene copolymer (HECO) has a melt flow rate MFR₂ (230 °C), measured according to ISO 1133, in the range of 30 to 90 g/10 min.

7. Polymer composition (C) according to any one of the preceding claims, wherein the mineral filler (F) is talc, preferably said talc has a specific surface area (BET) in the range of 5 to 25 m²/g.

8. Polymer composition (C) according to any one of the preceding claims, wherein said polymer composition comprises
(a) a polypropylene (PP), e.g. a polypropylene (PP) being a propylene homopolymer, wherein said polypropylene (PP), e.g. the polypropylene (PP) being a propylene homopolymer, preferably has a melt flow rate MFR₂ (230 °C), measured according to ISO 1133, in the range of 3 to 50 g/10 min,
and/or
(b) a high melt flow polypropylene (HMF-PP) being a heterophasic propylene copolymer comprising
(i) a polypropylene matrix (M2) and
(ii) an elastomeric copolymer (E2) comprising units derived from propylene and ethylene and/or C₄ to C₁₂ α-olefins,
wherein said high melt flow polypropylene (HMF-PP) being a heterophasic propylene copolymer has a melt flow rate MFR₂ (230 °C) measured according to ISO 1133 of at least 60 g/10 min.

9. Polymer composition (C) according to any one of the preceding claims, wherein said polymer composition comprises a high density polyethylene (HDPE), preferably said high density polyethylene (HDPE) has
(a) a melt flow rate MFR₂ (190 °C), measured according to ISO 1133, in the range of 2 to 30 g/10 min
and/or
(b) a density, measured according to ISO 1183, of at least 930 kg/m³.

10. Use of a combination of
(a) a 1,2,2,6,6-pentamethyl-4-piperidylester derivative of formula (I) 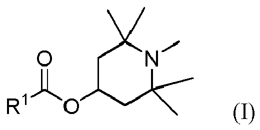 wherein
the molecular weight is below 1000 g/mol and R¹ is a linear or branched C₅ to C₂₅ alkyl residue, and
and
(b) a benzoate derivative of formula (II) 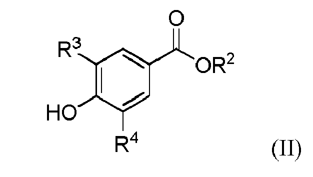 wherein
R² is a linear or branched C₅ to C₂₅ alkyl residue and
R³ and R⁴ are independently from each other methyl, ethyl, linear and/or branched C₃ to C₁₂ alkyl residues,
in a polymer composition (C) comprising further a heterophasic propylene copolymer (HECO) and a mineral filler (F)
to improve the odor of the polymer composition (C) and/or of the automotive article comprising said polymer composition (C).

11. Use according to claim 10, wherein the improvement of odor is accomplished in case the odor measured according to VDA 270 is below a value of 3.9.

12. Use according to claim 10 or 11, wherein the 1,2,2,6,6-pentamethyl-4-piperidylester derivative of formula (I) and/or the benzoate derivative of formula (II) are further defined as in claim 2.

13. Use according to any one of the claims 10 to 12, wherein the polymer composition (C) is further defined as in any one of the claims 1, and 3 to 9.

14. Automotive article comprising a polymer composition (C) according to any one of the preceding claims 1 to 9.

15. Process for producing a polymer composition (C) according to any one of the preceding claims 1 to 9 comprising the step of mixing the heterophasic propylene copolymer (HECO), the mineral filler (F), the 1,2,2,6,6-pentamethyl-4-piperidylester derivative of formula (I), the benzoate derivative of formula (II) and optionally the high density polyethylene (HDPE) and/or the polypropylene (PP) in an extruder.
